# EUROPEAN PATENT APPLICATION

(11) **EP 4 821 983 A1**
(43) Date of publication of application: **14.10.2026**
(21) Application number: 25169647.2
(22) Date of filing: 10.04.2025
(51) Int. Cl.: C08L 27/06, C08K 5/09, C08K 5/11, C08K 5/12, C08K 5/523

(54) **PLASTICIZING AND FLAME RETARDANT COMPOSITION AND ITS USE IN CHLOROPOLYMERS**

(71) Applicant: PCC ROKITA Spolka Akcyjna, 56-120 Brzeg Dolny (PL)
(72) Inventor: Juszczak, Patryk, 51-114 Wroclaw (PL); Kuzbik, Aleksander Michal, 51-113 Wroclaw (PL); Gorecki, Lukasz, 51-116 Wroclaw (PL)

(57) **Abstract**

The plasticizing and flame retardant compositions containing aryl phosphates and alkyl adipate and/or alkyl trimellitate, and their use in chloropolymers, particularly in solid polymers, preferably in polyvinyl chloride (PVC).

## Description

### Field of invention

The plasticizing and flame retardant compositions containing aryl phosphates and alkyl adipate and/or alkyl trimellitate, and their use in chloropolymers, particularly in solid polymers, preferably in polyvinyl chloride (PVC).

### State of the art

The flame retardant plasticizers' market is based almost exclusively on phosphate esters, the most important of which are triaryl and alkyl-aryl esters. Trialkyl esters are also encountered on a much smaller scale. It is also common to combine the above product groups in order to obtain mixtures with intermediate properties.

The plasticizers are considered to be high-boiling liquids or solids whose task is to lower the glass transition temperature of polymers during processing. The result is a permanent improvement in the physical properties of the polymer and facilitation of processing. The most commonly used plasticizers include dioctyl terephthalate (DOTP), diisononyl phthalate (DINP), diisodecyl phthalate (DIDP), dioctyl adipate (DOA) or trioctyl trimellitate (TOTM). Flame retardant plasticizers are specialized additives to plastics, combining the function of a plasticizer and a flame retardant. In addition to providing polymers with flexibility, these products have a positive effect on improving non-flammability and reducing the generation of smoke during the combustion process. A chloropolymer is a chemical compound of a macromolecular nature containing one or more chlorine atoms (CI) in its structure. The most important of these include PVC and derivatives such as polyvinylidene chloride (PVDC) or chloropolyvinyl chloride (CPVC).

In terms of resistance to the spread of fire, triaryl phosphate esters are unrivaled, which also provide very good flexibility of plastic materials, but only at ambient temperatures and higher. Triaryl phosphates are products of the reaction of phosphorus oxychloride (POCl₃) with phenol derivatives, which result in phosphate esters characterized by three aromatic groups. The most important of them are phenyl-isopropylphenyl phosphate and phenyl-tert-butylphenyl phosphate. Due to the characteristics of the standard synthesis process of these compounds, the reaction products are characterized by a high content of TPP ( triphenyl phosphate ): up to 35% by weight for phenyl-isopropylphenyl phosphate and up to 45% by weight for phenyl-tert-butylphenyl phosphate. Current legislative changes bring complications related to the use of this type of products. In particular, a problematic component is triphenyl phosphate (TPP, CAS 115-86-6), the content of which in triaryl esters often exceeds 30% by weight. Legislative work is currently underway to include TPP in the SVHC list and to classify this compound as an endocrine disruptor (EDC). The use of these additives in materials where their flexibility is necessary at lower temperatures (below 10°C) does not work. Additionally, due to the presence of a large number of aromatic groups in the molecule, during decomposition caused by fire, these products produce large amounts of smoke.

As the low-smoke solutions, which also provide flexibility of plastic materials at lowered temperatures (10° to -40°C), alkyl-aryl phosphate esters are most often used. Such commonly used additives include: diphenyl-isodecyl phosphate (CAS 29761-21-5) and diphenyl-2-ethylhexyl phosphate (CAS 1241-94-7). From the application point of view, the use of the above additives in chloropolymers provides very comparable properties of the finished plastic product. The diphenyl-2-ethylhexyl phosphate as a substance is present on the FDA (Food and Drug Administration) lists and Commission Regulation No. 10/2011 EU, which allows the use of this additive in products intended for contact with food. Both products contain 1-5% TPP in their composition, which means that the previously described changes in legislation also cover these compounds.

The last group of flame retardant plasticizers used on a large scale in chloropolymers are trialkyl phosphate esters. The most common is triethylhexyl phosphate (CAS 78-42-2). This additive provides excellent plasticizing properties for plastic materials at very low temperatures. However, its effect on ensuring non-flammability is negligible. Trialkyl esters are the only ones from the phosphate group that do not contain harmful compounds in their structure - in particular the above-mentioned TPP.

The document EP3290473B1 shows the use of dioctyl adipate and trioctyl trimellitate in laminates based on acrylic polymers. The use of several types of phosphates (e.g. triphenyl phosphate, tricresyl phosphate or triethylhexyl phosphate) is also indicated. The patent does not mention, however, the phosphates based on tert-butylphenol used in the invention. Additionally, the patent concerns only acrylic polymers and does not indicate the use of the compounds mentioned therein in chloropolymers.

The document US2006160936A1 suggests the use of plasticizers from the group of adipates and trimellitates as well as phosphates. There is no mention of tert-butylphenyl phosphates, however. The patent describes the use only in polyurethanes, not in chloropolymers.

The document EP3438188B1 indicates the use of various types of plasticizers in chloropolymers, i.e. chlorovinyl resins (vinyl chloride resins), also containing silicone oil. The use of DOA and TOTM is mentioned, as well as a certain group of phosphates.

However, there is no mention of the following phosphates: p- tert-butylphenyl -diphenyl, bis(p-tert-butylphenyl)phenyl and tris-p-tert-butylphenyl. In addition, the indicated phosphates are characterized by the presence of triphenyl phosphate TPP in their molecules, significantly above the value of 0.25% wt./wt. (w/w).

EP3571244B1 patent family describes the use of DOA, TOTM and phosphates being a mixture of mono-, bis-, tris -p-tert-butylphenyl phosphates, which are under the trade name Phosflex 71B HP. The document also describes the possibility of mixing the above components to obtain a blend, but is silent when it comes to demonstrating the effect of such a composition. The patent is limited to compositions containing polyester elastomers based on terephthalates and alkyl oxides in foamed form, and specifically PET/PBT/PPO/PTMO/PEO derivatives.

Based on the conducted state of the art, there is no solution that would propose combining (blending) plasticizers from the group of adipates or trimellitates with phosphates based on tert-butylphenol and then dedicating such a solution to chloromaterials, in particular solid materials. Additionally, there is no information in the state of the art about compositions that are characterized by a content of the problematic TPP below 0.25% w/w. The described invention has a particular application in solid materials, which translates into completely different mechanisms of flame retardancy and influence on mechanical properties compared to foamed materials.

The documents indicated in the state of theart describe blending plasticizers with phosphates with a TPP content higher than 0.25% w/w or dedicating solutions to foamed materials, where there are completely different requirements for mechanical and flammable properties. It is desirable that the composition is characterized by a positive effect on reducing smoke generation and improving mechanical properties at reduced temperatures in the PVC material made. Another key parameter is the pro-ecological nature of the invention consisting in the triphenyl phosphate content significantly below 0.25% w/w (wt./wt.). In light of the above information, it is clearly visible that there is a need to develop a composition based on plasticizers and flame retardant plasticizers that provide excellent properties for various applications, but at the same time that is characterized by a TPP content below 0.25% w/w. To the best of the applicant's knowledge, there is no single product that would exhibit all of the above features simultaneously.

The invention assumes a completely different, innovative approach to obtain a product with the above-mentioned properties. For this purpose, blending (mixing) of triaryl phosphates (based on phenyl-tert-butylphenyl phosphates ) with plasticizers without the flame retardant function DOA (dioctyl adipate) and TOTM (trioctyl trimellitate). The present invention proposes a much more pro-ecological approach by proposing a solution containing TPP well below 0.25% w/w. Furthermore, it is dedicated to chloropolymers, which are not mentioned in the state of the art mentioned above.

The innovative phenyl-tert-butylphenyl phosphates with reduced TPP content are used in the composition. Thanks to the innovative approach, the obtained plasticizing composition after use in chloropolymers is characterized by excellent mechanical properties at reduced temperatures, low smoke generation and at the same time contains a TPP component below 0.25% w/w.

Due to its unique properties, the composition, when used in PVC, makes it possible to meet restrictive smoke emission standards and obtain high mechanical property parameters at reduced temperatures. An additional environmental benefit is the content of triphenyl phosphate (TPP) in the described invention, significantly below 0.25% w/w. The determination of TPP content consists in dissolving the sample in a suitable solvent. Then, after filtering, the sample prepared in this way is analyzed using a gas chromatograph equipped with a suitable detector (FID, MS). Quantitative analysis is performed using the external standard method (standard curve) using a commercially available TPP product standard.

### The summary of the invention

The subject of the invention is a composition containing a mixture of chemical compounds in appropriate proportions. The composition was created by adding plasticizers without a flame retardant function (DOA or TOTM) to a composition containing aryl phosphates of a fixed composition.

In a first aspect, the subject of the invention is a plasticizing composition a) for chloropolymers comprising
a1) at least one aryl phosphate selected from the group of the following phosphates: p-tert-butylphenyl diphenyl phosphate, bis(p-tert-butylphenyl)phenyl phosphate, tris-p-tert-butylphenyl phosphate, triphenyl phosphate and/or mixtures thereof, in an amount of 55-85% by weight relative to the weight of the plasticizing composition,
a2) alkyl adipate and/or alkyl trimellitate in an amount of 15-45% by weight relative to the weight of the plasticizing composition,
wherein the plasticizing composition has a triphenyl phosphate content of less than 0.25% by weight based on the weight of the plasticizing composition.

Preferably, the plasticizing composition contains phosphate a1) in an amount of 65-80% by weight and a2) in an amount of 20-35% by weight based on the weight of the plasticizing composition, preferably alkyl adipate.

In a further aspect, the subject of the invention is a use of the plasticizing composition as defined above for solid or foamed, preferably solid, chloropolymers.

In a further aspect, the subject of the invention is a chloropolymer comprising
a) the plasticizing composition as defined above in an amount of 20-70 phr, preferably 23-54 phr (23-54 wt.% based on the weight of the polymer), and
b) polyvinyl chloride in the amount of 100 phr,
c) divalent metal ion stearate in the amount of 4 phr (4% by weight relative to the weight of the polymer),
where phr denotes the number of parts per 100 parts of polyvinyl chloride.

Preferably, the chloropolymer further comprises a dioctyl terephthalate in the amount of 23-27 phr (23-27%wt. based on the weight of the polymer).

Preferably, the chloropolymer has an relative elongation at a temperature of 10°C, determined in accordance with the ISO 527 standard, of more than 125% for a plasticizing composition content of 25 phr in the chloropolymer and more than 95% for a plasticizing composition content of 50 phr in the chloropolymer.

Preferably, the chloropolymer has a relative elongation at a temperature of -10°C, determined in accordance with ISO 527, of more than 20% for a plasticizing composition content of 50 phr in the chloropolymer.

Preferably, the chloropolymer has a melt flow rate (MFR), determined in accordance with ASTM D3364, of greater than 8,600 g/10 minutes.

Preferably, the chloropolymer has a smoke generation Ds_max, determined in accordance with ISO 5659, of less than 550.

Preferably, the chloropolymer is suspension or emulsion PVC.

### Advantages of the invention

The described invention proposes a completely innovative approach than previously known solutions in order to obtain a product with good plasticizing properties at low temperatures, low smoke and safe for the environment. The combination of aryl phosphates with reduced TPP content below 0.25% w/w with DOA and TOTM plasticizers gives non-obvious application advantages and innovatively allows, by blending (mixing) several, e.g. 5, chemical compounds, to obtain properties such as can be obtained using alkyl-aryl phosphates, which are much more difficult to synthesize, especially on a large scale and their production itself is much more burdensome for the environment. The environmental nuisance is related to the need to first obtain a mixture of chlorophosphates (phenyldichlorophosphate and diphenylchlorophosphate) of a precisely defined composition, which is obtained by distillation using a thin-film evaporator from a four-component mixture (phosphorus oxychloride, phenyldichlorophosphate, diphenylchlorophosphate and triphenyl phosphate). Then the foreshot and the distillation residue must be disposed of or returned to the process. The proper mixture of chlorophosphates is subsequently reacted with an appropriate aliphatic alcohol. At each stage, it is necessary to discharge and absorb gaseous hydrogen chloride. After synthesis, a multi-stage purification process takes place, generating sewage and waste. In addition, at each stage there is a risk of emitting VOCs into the environment, which, in the context of increasingly stringent environmental standards, translates into increasing costs for the hermetization of production nodes.

The described invention does not cause pollution and is produced completely waste-free. In this way, the problem of waste generation and its disposal has been eliminated, and thus its negative impact on the environment and on human health and life. Compared to market solutions, the composition according to the invention is characterized by a reduced content of the problematic compound triphenyl phosphate (significantly below 0.25% w/w).

### Detailed description of the invention

The subject of the invention is a composition containing a mixture of chemical compounds in appropriate proportions. The composition has been created by adding plasticizers without a flame retardant function (DOA or TOTM) to a composition containing aryl phosphates of a fixed composition.

In a first aspect, the subject of the invention is a plasticizing composition a) for chloropolymers comprising
a1) at least one aryl phosphate selected from the group of the following phosphates: p-tert-butylphenyl diphenyl phosphate, bis(p-tert-butylphenyl)phenyl phosphate, tris-p-tert-butylphenyl phosphate, triphenyl phosphate and/or mixtures thereof, in an amount of 55-85% by weight relative to the weight of the plasticizing composition,
a2) alkyl adipate and/or alkyl trimellitate in an amount of 15-45% by weight relative to the weight of the plasticizing composition,
wherein the plasticizing composition has a triphenyl phosphate content of less than 0.25% by weight based on the weight of the plasticizing composition.
Preferably, the plasticizing composition contains the phosphate a1) in an amount of 65-80% by weight and a2) in an amount of 20-35% by weight based on the weight of the plasticizing composition, preferably alkyl adipate.

In a further aspect, the subject of the invention is a use of a plasticizing composition as defined above for solid or foamed, preferably solid, chloropolymers.

In a further aspect, the subject of the invention is a chloropolymer comprising
a) the plasticizing composition as defined above in an amount of 20-70 phr, preferably 23-54 phr (23-54 wt.% based on the weight of the polymer), and
b) polyvinyl chloride in the amount of 100 phr,
c) divalent metal ion stearate in the amount of 4 phr (4% by weight relative to the weight of the polymer),
where phr denotes the number of parts per 100 parts of polyvinyl chloride.

Preferably, the chloropolymer further comprises a dioctyl terephthalate in the amount of 23-27 phr (23-27% by weight based on the weight of the polymer).

Preferably, the chloropolymer has a relative elongation at a temperature of 10°C, determined in accordance with the ISO 527 standard, of more than 125% for a plasticizing composition content of 25 phr in the chloropolymer and more than 95% for a plasticizing composition content of 50 phr in the chloropolymer.

Preferably, the chloropolymer has a relative elongation at a temperature of -10°C, determined in accordance with ISO 527, of more than 20% for a plasticizing composition content of 50 phr in the chloropolymer.

Preferably, the chloropolymer has a melt flow rate (MFR), determined in accordance with ASTM D3364, of greater than 8,600 g/10 minutes.

Preferably, the chloropolymer has a smoke generation Ds_max, determined in accordance with ISO 5659, of less than 550.

Preferably, the chloropolymer is suspension or emulsion PVC.

The plasticizing composition is preferably used in the above-mentioned materials in amounts of 20 - 70 phr, i.e. 20 - 70 g per 100 g of the produced polymer.

Unexpectedly, it turns out that the addition of DOA or TOTM, preferably DOA, in the amount of 20% - 45% of parts by weight, preferably in the amount of 30% - 40% of parts by weight in the plasticizing composition has had a positive effect on the change of physical properties of S-PVC materials (suspension polyvinyl chloride). Unexpectedly, there was an improvement in mechanical properties at reduced temperature (10°C and -10°C), a reduction in the amount of smoke generated and a reduction in the hardness of the plastic material. The advantages of the composition are based on the key ratio of plasticizers, that do not have a flame retardant function (DOA or TOTM), and aryl phosphates, characterized as a composition containing the chemical compounds described above, as a starting composition.

The obtained composition is characterized by viscosity (according to PN-EN ISO 12058-1:2018-10) in the range of 35 - 265 mPa *s at 25°C, and density (according to PN-EN ISO 2811-3:2011) in the range of 1.024 - 1.090 g/cm³ at 25°C. TGA verified (according to PN-EN ISO 11358-1:2014-09) of the composition gave a result of 5% weight loss at min. 190°C, and 25% weight loss at min. 230°C.

### Embodiments

The plasticizing composition according to the invention is obtained by introducing suitably weighed components into a vessel of optimum volume. Then they are mixed until a homogeneous clear liquid is obtained. Such mixing can be carried out using a traditional mechanical mixer. Preferably, the mixing temperature corresponds to room temperature (about 25°C). The maximum temperature during the production of the composition should not exceed 50 - 60°C.

Examples of compositions K1-K4 according to the invention:

| Ingredient / Example | K1 | K2 | K3 | K4 |
|---|---|---|---|---|
| p-Tert-butylphenyl diphenyl phosphate | 40.5 | 33.0 | 40.5 | 33.0 |
| Bis(p-tert-butylphenyl ) phenyl phosphate | 38.1 | 30.9 | 38.1 | 30.9 |
| Tris-p-tert-butylphenyl phosphate | 1,2 | 1.0 | 1,2 | 1.0 |
| Triphenyl phosphate | 0.2 | 0.1 | 0.2 | 0.1 |
| Dioctyl adipate | 20.0 | 35.0 | - | - |
| Trioctyl trimellitate | - | - | 20.0 | 35.0 |

For comparison purposes, a composition of triaryl plasticizers designated as K5 with reduced TPP content, but without dioctyl adipate or trioctyl trimellitate, as well as a triaryl phosphate composition with a standard TPP content designated as K6, which are standard compositions used as plasticizers, were prepared.

### Comparative examples K5-K6:

| Ingredient / Example | K5 | K6 |
|---|---|---|
| p-Tert-butylphenyl diphenyl phosphate | 50.7 | 45.0 |
| Bis(p-tert-butylphenyl ) phenyl phosphate | 47.6 | 15.0 |
| Tris-p-tert-butylphenyl phosphate | 1.5 | 2.0 |
| Triphenyl phosphate | 0.2 | 38.0 |

### Production of plastic samples for mechanical and flammability tests.

The prepared compositions K1-K6 were introduced into the S-PVC material to obtain plastic samples P1-P3:
S-PVC 100 parts per 100 parts of polymer (parts per hundred) parts resin - *phr*) Plasticizer dioctyl terephthalate (DOTP) in the amount of 25 phr
Composition K1-K6 in the amount of 25 phr
Calcium stearate 2.7 phr
Zinc stearate 1.3 phr
according to the procedure described below:
   a. Weighing and introducing 500 g of polyvinyl chloride (S-PVC), 13.5 g of calcium stearate and 6.6 g of zinc stearate into the suspension mixer. Mixing at 1200 rpm for 15 min until 70°C is reached.
   b. At a temperature of about 70°C, starting dosing DOTP 125 g, flame retardant plasticizers in the amount of 125 g while mixing through a funnel. Dosing at 800 rpm for 10 min to a temperature of 90°C.
   c. Then turning on the water cooling and mix at 1200 rpm for 3 minutes to approximately 90°C.
   d. Cooling with a water jacket at 250 rpm for 2 minutes to a temperature of approximately 50°C. Then waiting until ambient temperature without mixing with the mixer cover open.

Such prepared mixtures of dry-blend type prepared in this way were subjected to rolling using a two-roller according to the following procedure:
a. Roller temperature: 150°C (rear) and 155°C (front)
b. Rotation speed: 5.0 rpm (front roller) and approx. 3.1 rpm (rear roller) when dosing. After plasticizing the dry-blend PVC gradually increasing the speed up to 16 rpm on the front roller.
c. Gap size: from 0.5 mm when dosing S-PVC to max 1.5 mm when the material accumulates between the rollers (select visually). After plasticizing and wrapping the mixture on the front roller, reducing the gap to 0.5 - 1.0 mm.
d. Rolling time:
   - Dry blend dosing and pre-plasticization for 6-8 minutes
   - Main rolling using mixer: 6-8 minutes

Total time max 15 min.

The obtained PVC sheet after rolling was then subjected to granulation using a standard plastic granulator. The granulate was then subjected to compression on a hydraulic press to obtain shaped pieces for mechanical and flammability tests according to the procedure:
a. Heating the upper and lower plates to 185°C
b. Placing the mold between the sandwich sheets and the Teflon fabric
c. Filling the mold with granulate
d. Inserting the assembly into the hydraulic press and preheating for 0:30 without pressure at 185 °C
e. Pressing I: pressure 5T, time 1:00
f. Tempering/degassing
g. Pressing II: pressure 10T, time 0:30
h. Cooling for a few minutes under load

The shaped plaques obtained in the above-described manner were subjected to application tests:
1. Relative elongation at (10°C) according to ISO 527
2. Relative elongation at (-10°C) according to ISO 527
3. Shore's hardness according to ISO 868
4. Smoke generation Ds_4 and Ds_max according to ISO 5659
5. Melt Flow Rate [MFR] per ASTM D3364. 10 kg load at 175°C

Among the proposed plasticizing compositions according to the invention, the test results for the plastic sample P1, which contains 25 phr of the plasticizing composition according to the invention K1 and 25 phr of the DOTP plasticizer, are presented. Table 1 compares the results for the sample P1, containing the plasticizing composition according to the invention K1, with comparative compositions of flame retardant plasticizers with reduced TPP content (K5) - designated as P2 and with standard TPP content (K6) - designated as P3.

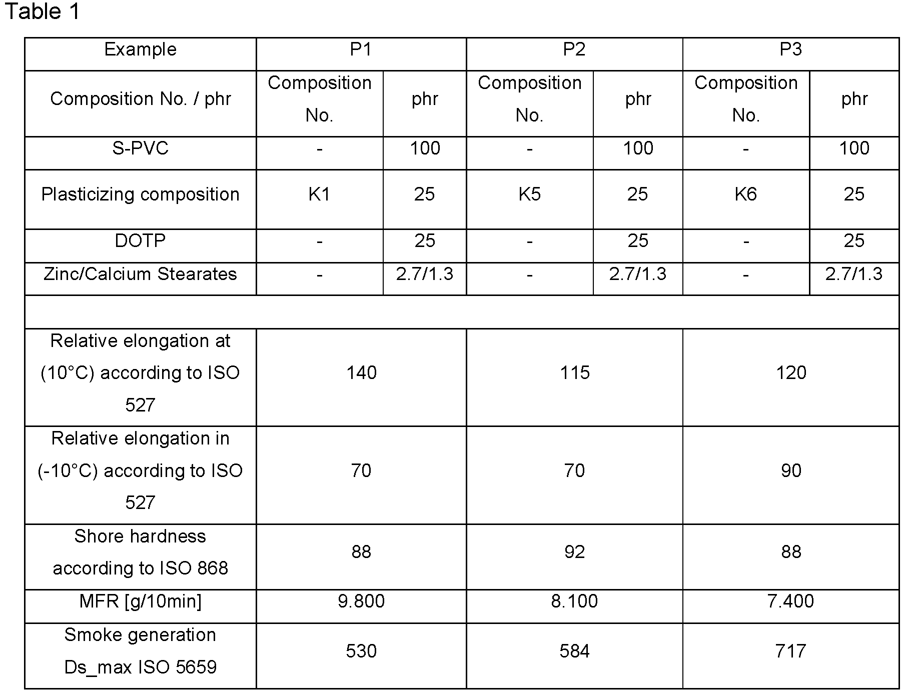

Exactly the same procedure for preparing plastic samples was used for compositions K1-K6, where plasticizers were introduced into the S-PVC material to obtain samples P4-P6: S-PVC in the amount of 100 phr
DOTP plasticizer in the amount of 25 phr
Composition K1-K6 in the amount of 25 phr
Calcium stearate 2.7 phr
Zinc stearate 1.3 phr

The test results of physical and mechanical properties for compositions containing 50 phr of the composition K1 according to the invention of sample P4 and, comparatively, for compositions K5 (sample P5) and K6 (sample P6).

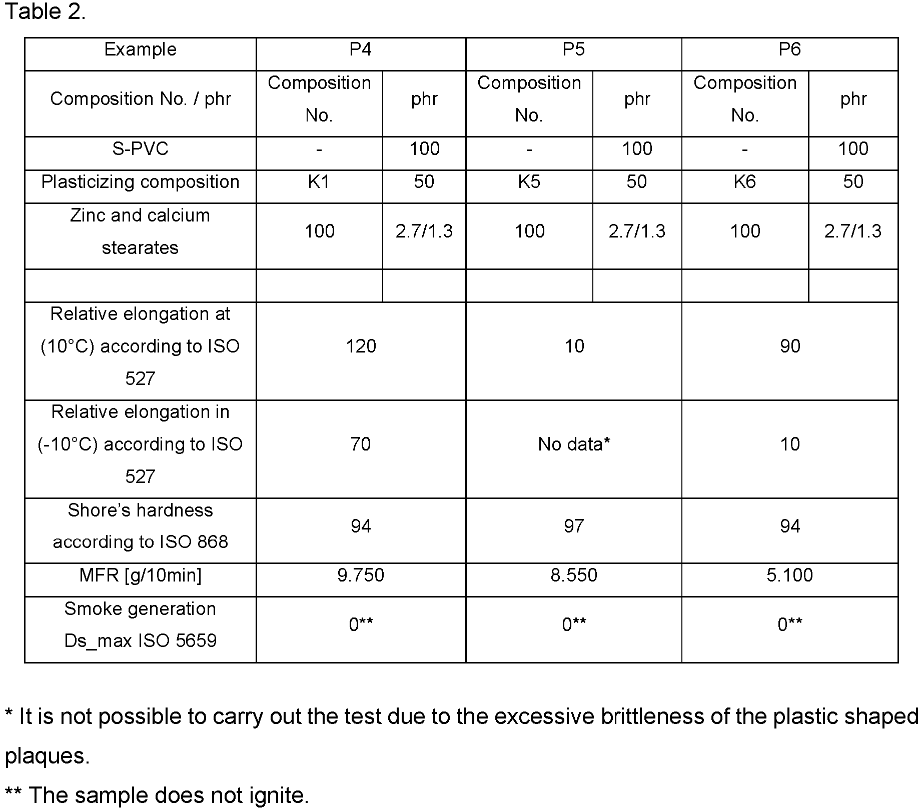

### Discussion of the results of physical and mechanical properties tests obtained for samples P1-P6.

The above-presented results of tests of physical and mechanical properties of materials containing the plasticizing composition K1 according to the invention (samples P1 and P4) show that, surprisingly, the addition of DOA to the starting composition having the composition K5 (samples P2 and P5) or K6 (samples P3 and P6) influences the characteristics of the entire processed S-PVC material, significantly improving its physical and/or mechanical properties. The use of the plasticizing composition K1 according to the invention in P1 and P4 causes a significant increase in elongation at lower temperatures: i.e. by 16-22% for P1 and 33-120% for P4 compared to the comparative examples at 10°C, and also by over 600% at -10°C for P4 (for a content of 50 phr of the plasticizing composition according to the invention - Table 2) compared to the comparative composition K5 in sample P5 and composition K6 (with a standard TPP content) in sample P6. It can be seen that the improvement of mechanical properties is facilitated by a higher content of the plasticizing composition according to the invention.

It has also been observed that the hardness of the plastic samples was reduced after use of the plasticizing composition according to the invention in samples P1 and P4 as compared to P2 and P5, and the hardness was maintained at the same level as compared to P3 and P6.

Moreover, the sample containing the plasticizing composition according to the invention K1 is characterized by a smoke generation level according to ISO 5659 lower by at least 10%, and even 35%, compared to P2 and P3. For samples P4-P6, smoke generation could not be determined due to the impossibility of igniting the samples, which indicates a very good level of non-flammability.

The use of the plasticizing composition according to the invention K1 also significantly increases the melting flow index (melting flow rate - MFR) of the plastic, which expresses the amount of thermoplastic material flowing through a circular nozzle of fixed dimensions in a specific time under a given load and at a given temperature, i.e. the ease of processing of plastic materials. The significant increases in MFR occur in samples P1 and P4 containing the plasticizing composition according to the invention and amount to at least 20%, 21% and 33% for P1 relative to P2 and P3, respectively, and 14% and as much as 91% for P4 relative to P5 and P6.

In summary: the above studies prove that the plasticizing composition according to the invention (containing DOA, which is not a standard additive reducing smoke generation) in a non-obvious way influences the improvement of smoke generation properties of polymers (plastics) by reducing the amount of smoke generation. The significant improvement of MFR after using the plasticizing composition according to the invention is also significant.

It was also shown that the use of the composition according to the invention is compatible with other additives, as evidenced by the good parameters of the produced polymers with added DOTP in sample P1.

The above studies show that the use of the plasticizing composition according to the invention in chloropolymers enables obtaining in a non-obvious way a plastic material with very good mechanical properties at low temperatures and reduced smoke generation. Additionally, the production of such a material is not problematic in processing processes such as calendering or extrusion, due to the significant improvement of the MFR index.

## Claims

1. A plasticizing composition a) for chloropolymers comprising
a1) at least one aryl phosphate selected from the group of the following phosphates: p-tert-butylphenyl diphenyl phosphate, bis(p-tert-butylphenyl)phenyl phosphate, tris-p-tert-butylphenyl phosphate, triphenyl phosphate and/or mixtures thereof, in an amount of 55-85% by weight relative to the weight of the plasticizing composition,
a2) alkyl adipate and/or alkyl trimellitate in an amount of 15-45% by weight relative to the weight of the plasticizing composition,
wherein the plasticizing composition has a triphenyl phosphate content of less than 0.25% by weight based on the weight of the plasticizing composition.

2. The plasticizing composition according to claim 1 comprising the phosphate a1) in an amount of 65-80 wt.%, and a2) in an amount of 20-35 wt.% based on the weight of the plasticizing composition, preferably a2) is an alkyl adipate, even more preferably a2) is an dioctyl adipate.

3. Use of the plasticizing composition according to claim 1 or 2 for solid or foamed chloropolymers, preferably solid chloropolymers.

4. A chloropolymer comprising
a) the plasticizing composition as defined in claims 1 or 2 in an amount of 20-70 phr, preferably 23-54 phr, and
b) polyvinyl chloride in the amount of 100 phr,
c) divalent metal ion stearate in the amount of 4 phr,
where phr denotes the number of parts per 100 parts of polyvinyl chloride.

5. The chloropolymer of claim 4 further comprising a dioctyl terephthalate in the amount of 23-27 phr.

6. The chloropolymer according to claim 4 or 5, wherein the relative elongation at a temperature of 10°C, determined in accordance with the ISO 527 standard, is greater than 125% for the plasticizing composition content of 25 phr in the chloropolymer and greater than 95% for the plasticizing composition content of 50 phr in the chloropolymer.

7. The chloropolymer according to any one of claims 4-6, wherein the relative elongation at a temperature of -10°C, determined in accordance with ISO 527, is above 20% for the plasticizing composition content of 50 phr in the chloropolymer.

8. The chloropolymer of any one of claims 4-7, wherein the melt flow rate (MFR) is greater than 8.600 g/10 minutes, as determined in accordance with ASTM D3364.

9. The chloropolymer according to any one of claims 4-8, wherein the smoke generation Ds_max, determined in accordance with ISO 5659, is less than 550.

10. The chloropolymer according to any one of claims 4-9, wherein the polymer is suspension or emulsion polyvinyl chloride (PVC).
